# EUROPEAN PATENT SPECIFICATION

(11) **EP 2 392 439 B1**
(45) Date of publication and mention of the grant of the patent: **20.11.2013**
(21) Application number: 11167997.3
(22) Date of filing: 27.05.2011
(51) Int. Cl.: B27M 1/08, B23Q 1/01, B23Q 39/02

(54) **Method and machine for machining components made of wood or the like, in particular components for door and window frames**
Verfahren und Vorrichtung zur Bearbeitung von Komponenten aus Holz oder dergleichen, insbesondere von Komponenten für Tür- und Fensterrahmen
Procédé et machine d'usinage de composants fabriqués en bois et similaire, en particulier des composants pour cadres de porte et fenêtre

(30) Priority: 27.05.2010 IT BO20100331
(43) Date of publication of application: 07.12.2011
(73) Proprietor: Biesse S.p.A., Pesaro (IT)
(72) Inventor: Bernardi, Paolo, 47841 CATTOLICA (IT)
(74) Representative: Bergadano, Mirko

(56) References cited:
- EP-A1- 1 815 954
- EP-A1- 2 145 744
- EP-A2- 2 159 021
- WO-A1-2009/141708

## Description

The present invention relates to a machine according to the preamble of claim 1 and to a method according to the preamble of claim 4. Such a machine and method are known from the document EP 1 815 954 A1.

In the following disclosure, the term frames will be used to identify doors, windows and doors of furniture pieces comprising a closing plate, made of glass, for example, mounted within an annular supporting frame, normally defined by a plurality of components made of wood or the like which are connected to one another.

In the field of machining components made of wood for door and window frames, it is known to provide a machine of the type comprising an elongated base provided with two elongated guide members parallel to a substantially horizontal first direction; a plurality of cross members mounted between the elongated guide members parallel to a second direction which is substantially horizontal and transversal to the first direction; at least one clamping vice mounted to each cross member to lock at least one component; and a bridge-crane, which extends above the base in the second direction, is provided with an operating head for machining the components, and is movable along the base in the first direction.

The known machines for machining components made of wood or the like of the above-described type have several drawbacks mainly deriving from that, due to the presence of a sole bridge crane, said machines, although tried and tested, have relatively low versatility and flexibility.

In order to obviate the above-mentioned drawbacks, machines were made comprising a first bridge-crane provided with an operating head for machining the components and a second bridge-crane provided with a clamping and carrying assembly to feed the components into the clamping vices, and withdraw the components from the same clamping vices.

However, these machines also have a relatively low productivity as they are able to carry out the machining of only one component at a time.

The object of the present invention is to provide a machine for machining components made of wood or the like, in particular components for door and window frames, which is free from the above-mentioned drawbacks and which is simple and cost-effective to be implemented.

According to the present invention, there is provided a machine for machining components made of wood or the like, in particular components for door and window frames, as claimed in claims 1 to 5.

The present invention further relates to a method for machining components made of wood or the like, in particular components for door and window frames.

According to the present invention, there is provided a method for machining components made of wood or the like, in particular components for door and window frames, as claimed in claims 6 to 17.

The present invention will now be described with reference to the accompanying drawings, which illustrate an embodiment thereof by way of non-limiting example, in which:
figure 1 is a diagrammatic perspective view, with parts removed for clarity, of a preferred embodiment of the machine according to the present invention;
figure 2 is a diagrammatic plan view, with parts removed for clarity, of the machine in figure 1; and
figure 3 diagrammatically shows, in a side elevation with parts removed for clarity, a method for operating the machine in figures 1 and 2.

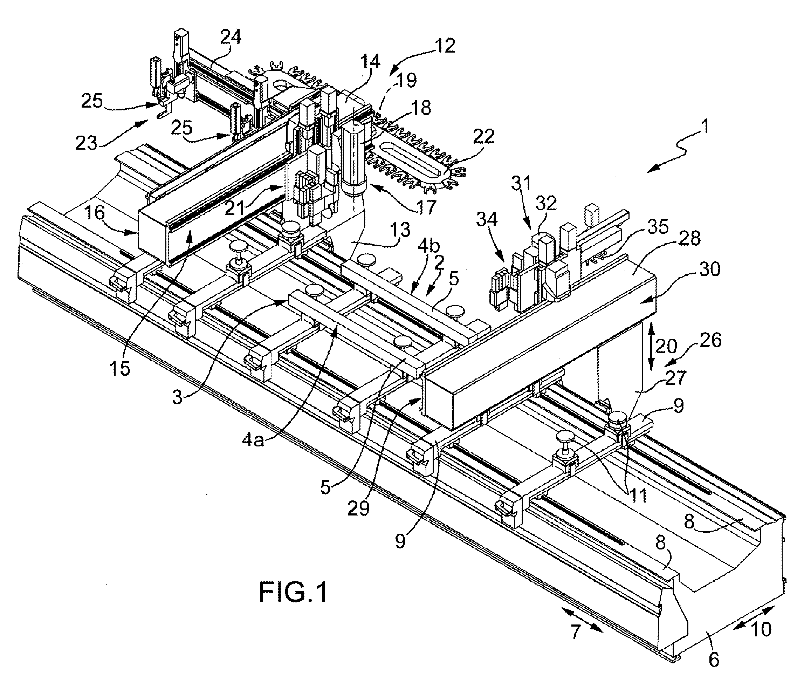

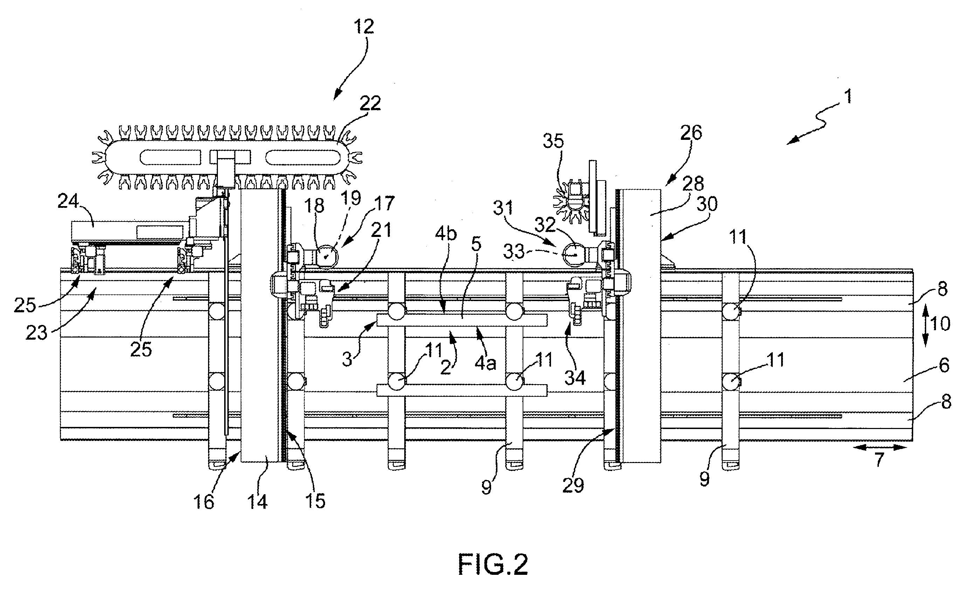

With reference to figures 1 and 2, numeral 1 indicates, as a whole, a machine for machining components 2 made of wood for door and window frames, each of which has an elongated parallelepiped shape, and is limited by two end faces 3 which are parallel and opposite to each other, by two side faces 4 which are parallel to each other and perpendicular to faces 3, and by two side faces 5 which are parallel to each other and perpendicular to faces 3 and 4.

Machine 1 comprises an elongated base 6, which extends in a horizontal direction 7, is substantially U-shaped, has two lateral, elongated guide members 8 which are parallel to direction 7, and supports a plurality of cross members 9, which will be referred to as "work surfaces" below, which extend between the guide members 8 in a direction 10 which is horizontal and transversal to direction 7, and are slidingly coupled to the guide members 8 in order to be moved, either manually or by means of respective known operating devices (not shown), along the guide members 8 in direction 7.

The work surfaces 9 support a plurality of clamping vices 11, the arrangement of which on the corresponding work surfaces 9 substantially depends on the dimensions of the components 2 to be machined and on the machining operations to be carried out on components 2, which are movable between a locking position and a releasing position of at least one component 2.

Base 6 further supports a first bridge-crane 12 comprising a vertical upright 13, which is coupled to base 3 in a known manner to perform, along the base 6 itself and driven by a known operating device (not shown), rectilinear movements in direction 7, and carries a cross member 14 connected to a free end thereof, which extends over base 6 in direction 10, and is limited by two side faces 15, 16 which are opposite to each other and substantially orthogonal to direction 10.

Bridge-crane 12 supports an operating head 17 of the known type, which is mounted to face 15, and is coupled to the cross member 14 in a known manner to perform, along the cross member 14 itself and driven by a known operating device (not shown), rectilinear movements in direction 10.

In this case, head 17 comprises an electro-spindle 18 which has a longitudinal axis 19 parallel to a vertical direction 20 which is orthogonal to directions 7 and 10, is adapted to receive and retain a known milling tool (not shown), and is mounted to head 17 in a known manner to perform, with respect to head 17, rectilinear movements in direction 20; and a boring assembly 21, which is mounted to head 17 in a known manner to perform, with respect to head 17, rectilinear movements in direction 20, and is provided with a plurality of drill bits (not shown) for carrying out holes parallel to directions 7 and/or 10 and/or 20.

Bridge-crane 12 further supports a tool storage 22, which is ring-shaped, extends through upright 13, and allows the replacement of the tools (not shown) and drill bits (not shown) mounted to the electro-spindle 18 and to the boring assembly 21, respectively, and a clamping and carrying assembly 23 to transfer components 2 into vices 11 and extract components 2 from vices 11.

Assembly 23 comprises a support arm 24, which protrudes from face 16 in direction 7, is coupled to cross member 14 in a known manner to perform, along the cross member 14 itself, rectilinear movements in direction 10, and is provided with a pair of gripping pincers 25, which are coupled to arm 24 in a known manner to perform, with respect to the arm 24 itself, rectilinear movements in directions 7 and 20, and each comprise a respective upper jaw and a respective lower jaw which are movable with respect to each other in direction 20 between a locking position and a releasing position of at least one component 2.

Base 6 further supports a second bridge-crane 26, which is completely separate and independent of bridge-crane 12, and comprises a vertical upright 27, which is coupled to the same side of base 6 in a known manner to perform, along the base 6 itself and driven by a known operating device (not shown), rectilinear movements in direction 7, and carries a cross member 28 connected to a free end thereof, which extends over base 6 in direction 10, and is limited by two side faces 29, 30 which are opposite to each other and substantially orthogonal to direction 10, face 29 facing face 15.

Bridge-crane 26 supports an operating head 31 of the known type, which is mounted to face 29, and is coupled to cross member 28 in a known manner to perform, along the cross member 28 itself and driven by a known operating device (not shown), rectilinear movements in direction 10.

In this case, head 31 comprises an electro-spindle 32 which has a longitudinal axis 33 parallel to direction 20, is adapted to receive and retain a known milling tool (not shown), and is mounted to head 31 in a known manner to perform, with respect to head 31, rectilinear movements in direction 20; a boring assembly 34 which is mounted to head 31 in a known manner to perform, with respect to head 31, rectilinear movements in direction 20, and is provided with a plurality of drill bits (not shown) for carrying out holes parallel to directions 7 and/or 10 and/or 20; and a tool storage 35 to replace the tool (not shown) mounted to the electro-spindle 32 each time.

In use, the clamping and carrying assembly 23 feeds at least one component 2, preferably at least two components 2, into the locking vices 11, and components 2 are locked within vices 11 parallel to direction 7, with the faces 3 being substantially orthogonal to the direction 7 itself, and so that one of faces 4 (shown by numeral 4a below) of each component 2 protrudes outside the vices 11 in direction 10.

At this point, the two operating heads 17, 31 of the two bridge-cranes 12, 26 simultaneously carry out two chip forming machining operations on the same component 2 or on two different components 2. Therefore, heads 17, 31 simultaneously mill the two faces 3 of a component 2 in direction 10, for example, or bore the two faces 3 of a component 2 in direction 7, or bore two distinct portions of face 4a of a component 2 in direction 10, or longitudinally profile faces 4a of two components 2 in direction 7, or mill or bore face 3 of a component 2 and mill or bore face 4a of another component 2.

Once the operation of machining faces 4a has been carried out, assembly 23 extracts the components 2 from vices 11 and feeds them again into vices 11 so as to allow faces 4 (shown by numeral 4b below) opposite to faces 4a to be machined.

According to an operating method (not shown), the clamping and carrying assembly 23 feeds four components 2 into the locking vices 11, i.e. all the components 2 of a frame, which are machined according to a combination of the above-described machining operations.

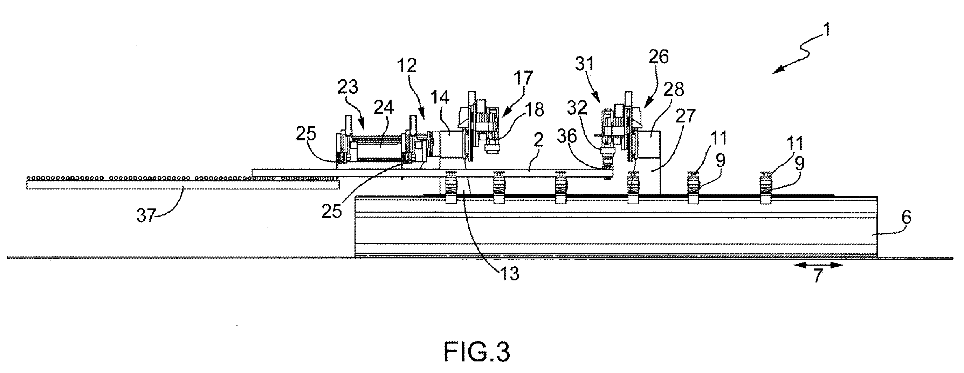

According to the operating method shown in figure 3, the tool (not shown) mounted to the electro-spindle 32 is replaced with a gripping pincer 36, which cooperates with pincers 25 of assembly 23 and with a roller conveyor 37 aligned to the base 6 in direction 7 in order to feed a relatively long component 2 into vices 11. In particular, component 2 is firstly gripped by at least one pincer 25 at a front end thereof protruding from the conveyor 37 in direction 7, is then moved forward by assembly 23 in direction 7, is then disengaged from pincers 25 and gripped by pincer 36 at a front end thereof, is then gripped by pincers 25 at an intermediate point thereof, and is finally moved forward by pincers 25 and 36 into vices 11.

The presence of two bridge-cranes 12 and 26 and of two operating heads 17 and 31, the position of the two heads 17 and 31 on the reciprocally facing faces 15 and 29, the movement of the bridge-cranes 12 and 26 according to respective laws of motion independent of one another in direction 7, and the movement of the heads 17 and 31 according to respective laws of motion independent of one another in direction 10 provide machine 1 with relatively high flexibility, versatility and thus productivity. In particular, the position of heads 17 and 31 allows components 2 of relatively small dimensions to be machined.

## Claims

1. A machine for machining components (2) made of wood or the like, in particular components (2) for door and window frames, the machine comprising a base (6) extending in a given first direction (7); a plurality of support bars (9), which are parallel to one another and to a second direction (10) transversal to the first direction (7), and are mobile along the base (6) in the first direction (7); at least one clamping vice (11) mounted on each support bar (9); and two bridge-cranes (12, 31), each of which is mobile along the base (6) in the first direction (7) independently from the other bridge-crane (12, 31), and comprises in turn a crossbar (14, 28), which extends above the base (6) in the second direction (10), and is aligned to the crossbar (14, 28) of the other bridge-crane (12, 31) in the first direction (7); and wherein each bridge-crane (12, 31) is provided with an operating head (17, 31) for the machining of the components (2); each operating head (17, 31) facing the crossbar (14, 28) of the other bridge-crane (12, 31) to allow the two operating heads (17, 31) to carry out at the same time respective chip-forming machining of at least one component (2); and being **characterised in that** the machine further comprises a first clamping and carrying assembly (23) mounted on a first said bridge-crane (12) to feed the components (2) in the clamping vices (11) and withdraw the components (2) from the clamping vices (11), and a second clamping and carrying assembly (36), which is mounted on a second said bridge-crane (26), and cooperates with the first clamping and carrying assembly (23) to feed the components (2) in the clamping vices (11) and withdraw the components (2) from the clamping vices (11).

2. The machine according to claim 1, wherein each operating head (17, 31) comprises at least one electrospindle (18, 32) adapted to receive and retain a milling tool.

3. The machine according to claim 1 or 2, wherein each operating head (17, 31) comprises at least one boring assembly (21, 34) to horizontally and/or vertically bore the components (2).

4. A method for machining the components (2) made of wood or the like, in particular components (2) for door and window frames, in a machine according to any of claims 1 to 3; the method comprising the steps of:
locking at least one component (2) within at least one clamping vice (11);
performing a first chip-forming machining by means of a first said operating head (17); and
performing, at the same time as the first machining, a second chip-forming machining by means of a second said operating head (31);
and being **characterised by** further comprising the step of:
inserting the components (2) in the clamping vices (11) and extracting the components (2) from the clamping vices (11) by means of a first clamping and carrying assembly (23) mounted on a first said bridge-crane (12) and a second clamping and carrying assembly (36) mounted on a second said bridge-crane (26).

5. The method according to claim 4, wherein said first and second machining are performed at the same time on the same component (2).

6. The method according to claim 4, wherein said first and second machining are performed at the same time on a first and respectively a second component (2).

7. The method according to any of claims 4 to 6, wherein each component (2) has an elongated shape and is limited by two end faces (3) substantially parallel and opposite to one another and by two side faces (4a, 4b) substantially parallel to one another and perpendicular to the end faces (3).

8. The method according to claim 7, further comprising the step of:
boring at the same time the two end faces (3) of a component (2).

9. The method according to claim 7 or 8, further comprising the step of:
boring at the same time the side face (4a, 4b) of a component (2) by means of the two operating heads (17, 31).

10. The method according to any of claims 7 to 9, further comprising the step of:
profiling at the same time two side faces (4a) of two components (2).

11. The method according to any of claims 7 to 10, further comprising the step of:
milling at the same time the end faces (3) of a component (2).

12. The method according to any of claims 7 to 11, further comprising the step of:
profiling or boring a side face (4a) of a first component (2) and, at the same time, milling or boring an end face (3) of a second component (2).

13. The method according to any of claims 4 to 12, further comprising the step of:
inserting the components (2) in the clamping vices (11) and extracting the components (2) from the clamping vices (11) by means of a clamping and carrying assembly (23) mounted on a first said bridge-crane (12).

14. The method according to any of claims 4 to 13, further comprising the steps of:
moving the two bridge-cranes (12, 26) according to respective laws of motion independent of one another in the first direction (7); and
moving the two operating heads (17, 31) according to respective laws of motion independent of one another in the second direction (10).

## Patentansprüche

1. Eine Maschine zum Bearbeiten von Komponenten (2) aus Holz oder dergleichen, insbesondere Komponenten (2) für Tür- und Fensterrahmen, wobei die Maschine eine Basis (6) umfasst, die sich in einer gegebenen ersten Richtung (7) erstreckt; eine Vielzahl von Tragriegeln (9), die parallel zueinander sind und zu einer zweiten Richtung (10) quer zu der ersten Richtung (7), und die beweglich entlang der Basis (6) in der ersten Richtung (7) sind; wenigstens eine Spanneinrichtung (11), die auf jedem Tragriegel (9) montiert ist; und zwei Brückenkräne (12, 31), von denen jeder beweglich entlang der Basis (6) in der ersten Richtung (7) unabhängig von dem anderen Brückenkran (12, 31) ist und wiederum einen Querriegel (14, 28) umfasst, der sich oberhalb der Basis (6) in der zweiten Richtung (10) erstreckt und mit dem Querriegel (14, 28) des anderen Brückenkran (12, 31) in der ersten Richtung (7) ausgerichtet ist; und wobei jeder Brückenkran (12, 31) mit einem Bearbeitungskopf (17, 31) zum Bearbeiten der Komponenten (2) versehen ist; jeder Bearbeitungskopf (17, 31) dem Querriegel (14, 28) des anderen Brückenkrans (12, 31) gegenübersteht, um zu ermöglichen, dass zwei Bearbeitungsköpfe (17, 31) gleichzeitig eine entsprechende spanerzeugende Bearbeitung von wenigstens einer Komponente (12) ausführen; und **dadurch gekennzeichnet, dass** die Maschine ferner eine erste Spann- und Tragbaugruppe (23) umfasst, die auf einem ersten der genannten Brückenkräne (12) montiert ist, um die Komponenten (2) in die Spanneinrichtung (11) einzuführen und die Komponenten (2) aus den Spanneinrichtungen (11) herauszuziehen, und eine zweite Spann- und Tragbaugruppe (36), welche auf einem zweiten der genannten Brückenkräne (26) montiert ist und mit der ersten Spann- und Tragbaugruppe (23) zusammenarbeitet, um die Komponenten (2) in die Spanneinrichtungen (11) einzuführen und die Komponenten (2) aus den Spanneinrichtungen (11) herauszuziehen.

2. Die Maschine gemäß Anspruch 1, wobei jeder Bearbeitungskopf (17, 31) wenigstens eine Elektrospindel (18, 32) umfasst, die angepasst ist, um ein Fräswerkzeug aufzunehmen und zu halten.

3. Die Maschine gemäß Anspruch 1 oder 2, wobei jeder Bearbeitungskopf (17, 31) wenigstens eine Bohrbaugruppe (21, 34) umfasst, um die Komponenten (2) horizontal und/oder vertikal zu bohren.

4. Ein Verfahren zum Bearbeiten der Komponenten (2) aus Holz oder dergleichen, insbesondere Komponenten (2) für Tür- und Fensterrahmen, in einer Maschine gemäß einem der Ansprüche 1 bis 3, wobei das Verfahren die folgenden Schritte umfasst:
Verriegeln wenigstens einer Komponente (2) innerhalb wenigstens einer Spanneinrichtungen (11);
Ausführen einer ersten spanbildenden Bearbeitung mittels des genannten ersten Bearbeitungsicopfes (17); und
Ausführen zur selben Zeit wie die erste Bearbeitung einer zweiten spanbildenden Bearbeitung mittels des genannten zweiten Bearbeitungskopfes (31);
und welches **dadurch gekennzeichnet ist, dass** es ferner den folgenden Schritt umfasst:
Einzügen der Komponenten (2) in die Spanneinrichtungen (11) und Herausnehmen der Komponenten (2) aus den Spanneinrichtungen (11) mittels einer ersten Spann- und Tragbaugruppe (23), die auf dem genannten ersten Brückenkran (12) montiert ist, und einer zweiten Spann- und Tragbaugruppe (36), die auf dem zweiten genannten Brückenkran (26) montiert ist.

5. Das Verfahren gemäß Anspruch 4, wobei die genannte erste und zweite Bearbeitung gleichzeitig an derselben Komponente (2) durchgeführt wird.

6. Das Verfahren gemäß Anspruch 4, wobei die genannte erste und zweite Bearbeitung gleichzeitig an einer ersten und entsprechend einer zweiten Komponente (2) durchgeführt wird.

7. Das Verfahren gemäß einem der Ansprüche 4 bis 6, wobei jede Komponente (2) eine längliche Form aufweist und durch zwei Stirnflächen (3) begrenzt wird, die im Wesentlichen parallel und entgegengesetzt zueinander sind, und durch zwei Seitenflächen (4a, 4b), die im Wesentlichen parallel zueinander und senkrecht zu den Stirnflächen (3) sind.

8. Das Verfahren gemäß Anspruch 7, ferner umfassend den folgenden Schritt:
Bohren zu der gleichen Zeit der zwei Stirnfläche (3) einer Komponente (2).

9. Das Verfahren gemäß Anspruch 7 oder 8, ferner umfassend den folgenden Schritt:
Bohren zu der gleichen Zeit der Seitenfläche (4a, 4b) einer Komponente (2) mittels der beiden Bearbeitungsköpfe (17, 31).

10. Das Verfahren gemäß einem der Ansprüche 7 bis 9, ferner umfassend den folgenden Schritt:
Profilieren zu der gleichen Zeit der zwei Seitenflächen (4a) von zwei Komponenten (2).

11. Das Verfahren gemäß einem der Ansprüche 7 bis 10, ferner umfassend den folgenden Schritt:
Fräsen zu der gleichen Zeit der Stirnflächen (3) einer Komponente (2).

12. Das Verfahren gemäß einem der Ansprüche 7 bis 11, ferner umfassend den folgenden Schritt:
Profilieren oder Bohren einer Seitenfläche (4a) einer ersten Komponente (2) und, zu der gleichen Zeit, Fräsen oder Bohren einer Stirnfläche (3) einer zweiten Komponenten (2).

13. Das Verfahren gemäß einem der Ansprüche 4 bis 12, ferner umfassend den folgenden Schritt:
Einsetzen der Komponenten (2) in die Spanneinrichtungen (11) und Herausnehmen der Komponenten (2) aus den Spanneinrichtungen (11) mittels einer Spann- und Tragbaugruppe (23), die auf dem genannten ersten Brückenkran (12) montiert ist.

14. Das Verfahren gemäß einem der Ansprüche 4 bis 13, ferner umfassend die folgenden Schritte:
Bewegen der beiden Brückenkräne (12, 26) gemäß jeweiligen Bewegungsgesetzen unabhängig voneinander in der ersten Richtung (7); und
Bewegen der zwei Bearbeitungsköpfe (17, 31) gemäß jeweiligen Bewegungsgesetzen unabhängig voneinander in der zweiten Richtung (10).

## Revendications

1. Machine destinée à usiner des composants (2) réalisés en bois ou autre analogue, en particulier, des composants (2) pour des cadres de porte et de fenêtre, la machine comprenant une base (6) s'étendant dans une première direction donnée (7) ; une pluralité de barres de support (9), qui sont parallèles les unes aux autres et à une deuxième direction (10) transversale par rapport à la première direction (7), et sont mobiles le long de la base (6) dans la première direction (7) ; au moins un étau de serrage (11) monté sur chaque barre de support (9) ; et deux ponts roulants (12, 31), dont chacun est mobile le long de la base (6) dans la première direction (7) indépendamment de l'autre pont roulant (12, 31), et comprend à tour de rôle une barre transversale (14, 28), qui s'étend au-dessus de la base (6) dans la deuxième direction (10), et est alignée par rapport à la barre transversale (14, 28) de l'autre pont roulant (12, 31) dans la première direction (7) ; et où chaque pont roulant (12, 31) est pourvu d'une tête d'actionnement (17, 31) pour l'usinage des composants (2) ; chaque tête d'actionnement (17, 31) faisant face à la barre transversale (14, 28) de l'autre pont roulant (12, 31) pour permettre aux deux têtes d'actionnement (17, 31) d'effectuer en même temps des usinages par enlèvement de copeaux respectifs d'au moins un composant (2) ; et étant **caractérisée en ce que** la machine comprend en outre un premier ensemble de serrage et de support (23) monté sur ledit premier pont roulant (12) pour alimenter les composants (2) dans les étaux de serrage (11) et retirer les composants (2) à partir des étaux de serrage (11), et un deuxième ensemble de serrage et de support (36), qui est monté sur ledit deuxième pont roulant (26), et coopère avec le premier ensemble de serrage et de support (23) pour alimenter les composants (2) dans les étaux de serrage (11) et retirer les composants (2) à partir des étaux de serrage (11).

2. Machine selon la revendication 1, dans laquelle chaque tête d'actionnement (17, 31) comprend au moins une électro-broche (18, 32) adaptée pour recevoir et retenir un outil de fraisage.

3. Machine selon la revendication 1 ou 2, dans laquelle chaque tête d'actionnement (17, 31) comprend au moins un ensemble de perçage (21, 34) pour percer horizontalement et/ou verticalement les composants (2).

4. Procédé destiné à usiner des composants (2) réalisés en bois ou autre analogue, en particulier, des composants (2) pour des cadres de porte et de fenêtre, dans une machine selon l'une des revendications 1 à 3 ; le procédé comprenant les étapes qui consistent :
à bloquer au moins un composant (2) dans au moins un étau de serrage (11) ;
à effectuer un premier usinage par enlèvement de copeaux au moyen de ladite première tête d'actionnement (17) ; et
à effectuer, en même temps que le premier usinage, un deuxième usinage par enlèvement de copeaux au moyen de ladite deuxième tête d'actionnement (31) ;
et étant **caractérisé en ce qu'**il comprend en outre l'étape qui consiste :
à insérer les composants (2) dans les étaux de serrage (11) et à extraire les composants (2) à partir des étaux de serrage (11) au moyen d'un premier ensemble de serrage et de support (23) monté sur ledit premier pont roulant (12) et d'un deuxième ensemble de serrage et de support (36) monté sur ledit deuxième pont roulant (26).

5. Procédé selon la revendication 4, dans lequel lesdits premier et deuxième usinages sont effectués en même temps sur le même composant (2).

6. Procédé selon la revendication 4, dans lequel lesdits premier et deuxième usinages sont effectués en même temps sur un premier et respectivement un deuxième composant (2).

7. Procédé selon l'une des revendications 4 à 6, dans lequel chaque composant (2) a une forme allongée et est limité par deux faces d'extrémité (3) essentiellement parallèles et opposées l'une à l'autre et par deux faces latérales (4a, 4b) essentiellement parallèles l'une à l'autre et perpendiculaires aux faces d'extrémité (3).

8. Procédé selon la revendication 7, comprenant en outre l'étape qui consiste :
à percer en même temps les deux faces d'extrémité (3) d'un composant (2).

9. Procédé selon la revendication 7 ou 8, comprenant en outre l'étape qui consiste :
à percer en même temps la face latérale (4a, 4b) d'un composant (2) au moyen des deux têtes d'actionnement (17, 31).

10. Procédé selon l'une des revendications 7 à 9, comprenant en outre l'étape qui consiste :
à profiler en même temps deux faces latérales (4a) de deux composants (2).

11. Procédé selon l'une des revendications 7 à 10, comprenant en outre l'étape qui consiste :
à fraiser en même temps les faces d'extrémité (3) d'un composant (2).

12. Procédé selon l'une des revendications 7 à 11, comprenant en outre l'étape qui consiste :
à profiler ou à percer une face latérale (4a) d'un premier composant (2) et, en même temps, à fraiser ou à percer une face d'extrémité (3) d'un deuxième composant (2).

13. Procédé selon l'une des revendications 4 à 12, comprenant en outre l'étape qui consiste :
à insérer les composants (2) dans les étaux de serrage (11) et à extraire les composants (2) à partir des étaux de serrage (11) au moyen d'un ensemble de serrage et de support (23) monté sur ledit premier pont roulant (12).

14. Procédé selon l'une des revendications 4 à 13, comprenant en outre les étapes qui consistent :
à déplacer les deux ponts roulants (12, 26) selon des lois respectives de mouvement de manière indépendante l'un par rapport à l'autre dans la première direction (7) ; et
à déplacer les deux têtes d'actionnement (17, 31) selon des lois respectives de mouvement de manière indépendante l'une par rapport à l'autre dans la deuxième direction (10).
